# EUROPÄISCHE PATENTSCHRIFT

(11) **EP 1 917 169 B1**
(45) Veröffentlichungstag und Bekanntmachung des Hinweises auf die Patenterteilung: **19.06.2013**
(21) Anmeldenummer: 06792804.4
(22) Anmeldetag: 11.08.2006
(51) Int. Cl.: B60T 8/44, B60T 13/14, B60T 17/18

(54) **VERFAHREN UND VORRICHTUNG ZUM BETRIEB EINER HYDRAULISCHEN FAHRZEUGBREMSANLAGE**
METHOD AND DEVICE FOR OPERATING A HYDRAULIC BRAKE SYSTEM FOR A VEHICLE
PROCEDE ET DISPOSITIF POUR FAIRE FONCTIONNER UN SYSTEME DE FREINAGE HYDRAULIQUE

(30) Priorität: 15.08.2005 DE 102005038714; 16.05.2006 DE 102006022734
(43) Veröffentlichungstag der Anmeldung: 07.05.2008
(73) Patentinhaber: Continental Teves AG & Co. oHG, 60488 Frankfurt (DE)
(72) Erfinder: WOYWOD, Jürgen, 64546 Mörfelden (DE); GRONAU, Ralph, 35083 Wetter (DE); BURKHARD, Dieter, 55411 Bingen-Büdesheim (DE)
(86) Internationale Anmeldenummer: PCT/EP2006/065273
(87) Internationale Veröffentlichungsnummer: WO 2007/020249

(56) Entgegenhaltungen:
- EP-A1- 0 906 858
- WO-A-97/14590
- WO-A-98/26967
- WO-A-2004/005095
- WO-A2-2004/045934
- DE-A1- 10 110 060
- DE-A1- 10 244 375
- DE-C1- 19 644 880

## Beschreibung

Die Erfindung betrifft eine hydraulischen Fahrzeugbremsanlage, die einen von einer Bremsbetätigungseinrichtung betätigbaren Bremsdruckgeber, der über eine hydraulische Leitung mit Radbremsen des Fahrzeugs verbindbar ist, aufweist, wobei der Bremsdruckgeber im wesentlichen aus einem Hauptbremszylinder und einem vorgeschalteten hydraulischen Verstärker besteht, der eine Verstärkungskammer und einen darin angeordneten Verstärkerkolben aufweist, der in Kraftabgaberichtung über ein Betätigungselement mit einem Hauptbremszylinderkolben wirkverbunden ist und der zwecks Bremskraftverstärkung mit einem hydraulischen Druck eines von einer hydraulischen Pumpe ladbaren Hochdruckspeichers nach Maßgabe einer die Betätigung erfassenden Sensorik und/oder nach Maßgabe eines den im Hauptbremszylinders herrschenden, hydraulischen Drucks erfassenden Drucksensors beaufschlagbar ist. Außerdem betrifft die Erfindung ein Verfahren zum Betrieb einer hydraulischen Fahrzeugbremsanlage gemäß Oberbegriff von Anspruch 3.

Die WO98/2696 A1 offenbart eine hydraulisches Kraftfahrzeugbremssystem, welches einen Hauptbremszylinder mit Vakuumbremskraftverstärker als erste Druckquelle und ein elektrisch betriebenes Motor-Pumpen-Aggregat als zweite Druckquelle aufweist. Wird eine Funktionsstörung der ersten Druckquelle bzw. ein Ausfall des Vakuumbremskraftverstärkers erkannt, so wird diese durch die zweite Druckquelle ersetzt, um weiterhin hilfskraftunterstützte Bremsvorgänge zu ermöglichen. Vorzugsweise erfolgt die Erkennung einer Funktionsstörung der ersten Druckquelle anhand des Vergleichs der Signale eines Bremskraftsensors und eines Drucksensors am Hauptbremszylinder.

Im Zuge neuer Motorentechnik, wie z.B. Diesel, oder Benzin-Direkteinspritzer, ist eine hinreichende Unterdruckversorgung für einen herkömmlichen Unterdruckbremskraftverstärker zur Bremskraftunterstützung immer seltener gegeben. Aus diesem Grund sind hydraulische Bremsanlagen mit einer aktiven hydraulischen Bremskraftunterstützung entwickelt worden. Eine derartige hydraulische Bremsanlage ist beispielsweise aus der DE 102 44 375 A1 bekannt. Bei der vorbekannten hydraulischen Fahrzeugbremsanlage ist ein manuell betätigbarer Bremsdruckgeber vorgesehen, der über eine hydraulische Leitung mit Radbremsen des Fahrzeugs verbindbar ist und der aus einem Hauptbremszylinder und einem vorgeschalteten hydraulischen Verstärker besteht. Der hydraulische Verstärker ist mit einem Druckmittelvorratsbehälter verbunden und weist eine koaxial zum Hauptbremszylinder angeordnete Verstärkungskammer und einen darin angeordneten Verstärkerkolben auf. Zur Bremskraftverstärkung wird die Verstärkerkammer mit einem hydraulischen Druck einer Fremddruckquelle beaufschlagt.

Auch von dieser vorbekannten Bremsanlage wird bei einem Ausfall eines Teilsystems eine Notbremsfunktion erwartet, die es dem Fahrzeugführer ermöglicht, zumindest eine Bremsung mit Bremskraftunterstützung durchzuführen, um das Fahrzeug anzuhalten. Vorteilhaft ist selbstverständlich eine "Mehrfachunterstützung", die dem Fahrzeugführer das Aufsuchen einer Werkstatt gestattet, ohne dass signifikant größere Betätigungskräfte erforderlich sind, um eine hinreichende Verzögerung zu erzielen.

Es ist daher Aufgabe der vorliegenden Erfindung, eine kostengünstige und sichere Rückfallebene für einen einfachen hydraulischen Verstärker der eingangs genannten Gattung darzustellen.

Die vorliegende Aufgabe wird durch die Merkmale des Anspruchs 1 gelöst, wonach Mittel vorgesehen sind, die bei einem Ausfall des Hochdruckspeichers eine Beaufschlagung der Radbremsen mit hydraulischem Druck durch die hydraulische Pumpe nach Maßgabe der die Betätigung erfassenden Sensorik oder nach Maßgabe des Drucksensors durchführen.

Erfindungsgemäß ist eine elektronische Steuer- und Regeleinheit vorgesehen, die zwei getrennte Steuergeräte umfasst, wobei jedem Steuergerät jeweils ein Drehwinkelgeber und ein Drucksensor zugeordnet wird.

Dabei ist vorgesehen, dass die Sensorik durch zwei Drehwinkelgeber gebildet wird und dass ein zweiter Drucksensor zur Erfassung des im Hauptbremszylinder herrschenden, hydraulischen Drucks vorgesehen ist.

Eine besonders vorteilhafte Weiterbildung des erfindungsgemäßen Gegenstandes sieht vor, dass Mittel vorgesehen sind, die bei einem Ausfall der Pumpe eine Beaufschlagung der Verstärkerkammer mit hydraulischem Druck aus dem Hochdruckspeicher nach Maßgabe der die Betätigung erfassenden Sensorik oder nach Maßgabe des Drucksensors durchführen.

Die Aufgabe wird verfahrensmäßig durch die Merkmale des Anspruchs 3 gelöst, wonach bei einem Ausfall des Hochdruckspeichers die Radbremsen von der hydraulischen Pumpe nach Maßgabe der die Betätigung erfassenden Sensorik oder nach Maßgabe des Drucksensors mit hydraulischem Druck beaufschlagt werden.

Dabei ist vorgesehen, dass die Sensorik durch zwei Drehwinkelgeber gebildet wird, deren Ausgangswerte miteinander verglichen werden. Außerdem ist ein zweiter Drucksensor zur Erfassung des im Hauptbremszylinder herrschenden, hydraulischen Drucks vorgesehen, wobei ein Vergleich der Ausgangwerte beider Drucksensoren vorgenommen wird.

Bei einer Weiterbildung des erfindungsgemäßen Verfahrens ist vorgesehen, dass bei einem Ausfall der Pumpe die Verstärkerkammer nach Maßgabe der die Betätigung erfassenden Sensorik oder nach Maßgabe des Drucksensors mit hydraulischem Druck aus dem Hochdruckspeicher beaufschlagt wird.

Die Erfindung wird nachfolgend anhand eines Ausführungsbeispiels im Zusammenhang mit der beiliegenden Zeichnung näher erläutert. In der Zeichnung zeigen
- Fig. 1: ein schematisch dargestelltes Schaltbild einer hydraulischen Fahrzeugbremsanlage, an der das erfindungsgemäße Verfahren durchführbar ist und
- Fig. 2: eine schematische Darstellung der erfindungsgemäßen Steuer- und Regeleinheit.

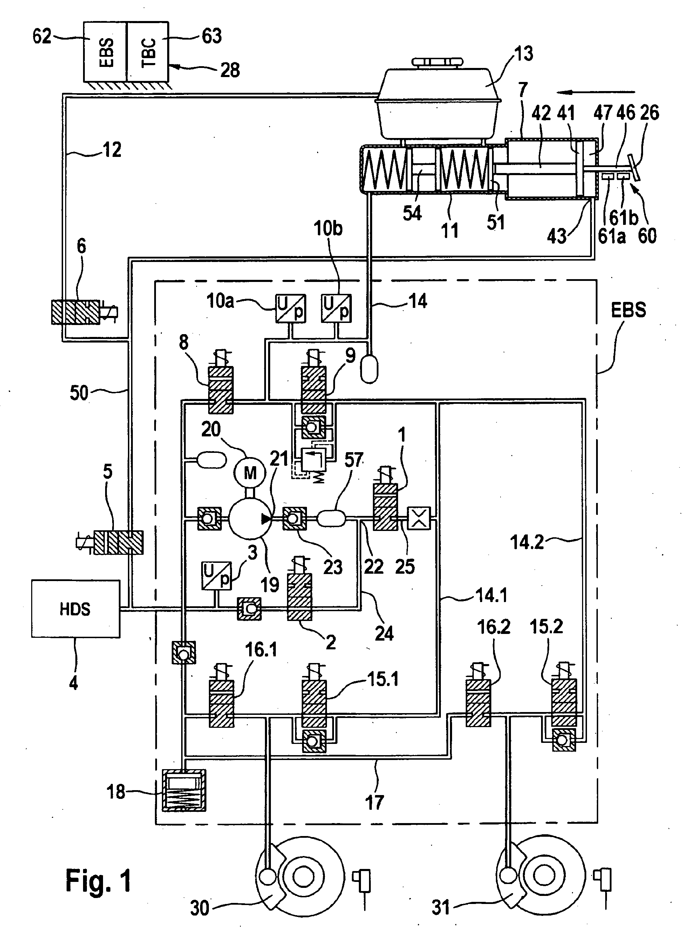

Nach Fig. 1 weist die hydraulische Fahrzeugbremsanlage als Bremsdruckgeber einen hydraulischen Verstärker 7 auf, der als eine Verlängerung der Betätigungseinheit 11 mit Behälter 13 ausgebildet ist. Die Betätigungseinheit 11 ist im vorliegenden Ausführungsbeispiel als Tandem-Hauptzylinder ausgebildet und wird im Folgenden kurz als THZ bezeichnet. Der hydraulische Verstärker 7 weist einen Verstärkerkolben 41 auf, der in einem Verstärkergehäuse geführt wird, wobei sich eine Druckstange 42 des Verstärkerkolbens 41 am Kolben 51 des Druckstangenkreises des THZ 11 abstützt. In Betätigungsrichtung gesehen, die in Fig. 1 als Pfeil dargestellt ist, ist vor dem Verstärkerkolben 41 ein Verstärkungskammer 47 ausgebildet, in den ein Hydraulikanschluss 43 mündet. Der Verfahrweg des Verstärkerkolbens 41 entspricht dem addierten Hub beider Kreise des THZ 11. Auf der Stirnseite des Verstärkers 7 ist eine Öffnung vorgesehen, durch die die Druckstange 46 des Bremspedals 26 in den Verstärker 7 eindringt. Durch diese Konstruktion ist eine Notbetätigung des THZ 11 möglich. Im Fall einer Störung oder eines Ausfalls des hydraulischen Drucks oder falls der Verstärker 7 ausfallen sollte, kann der Fahrzeugführer durch die Druckstange 46 den Kolben 41 auch direkt, d.h. auf mechanischem Weg, betätigen. Somit gewährleistet das System eine so genannte Fail-Safe-Funktion mittels direktem hydraulisch-mechanischen Durchgriff.

Das Verhältnis der Fläche des Verstärkerkolbens 41 und der Flächen der Kolben 51, 54 des THZ, ergibt in Verbindung mit der von einer Hochdruckquelle zur Verfügung gestellten Druck, den mit Verstärkung zu erreichenden THZ-Druck. Dabei wird der von einer Steuerung bzw. Regelung angeforderte Druck durch den Druck der Hochdruckquelle variiert.

Erfindungsgemäß wird als Hochdruckquelle ein hydraulischer Hochdruckspeicher (HDS) 4 eingesetzt. Der Hochdruckspeicher 4 wird vorzugsweise durch eine hydraulische Pumpe 19, 20 mit unter Druck stehender Bremsflüssigkeit versorgt, d.h. "geladen".

Ein an die Betätigungseinheit 11 angeschlossener Bremskreis (von insgesamt zwei Bremskreisen), der auf zwei Radbremsen 30, 31 einwirkt, ist in Fig. 1 dargestellt. Der zweite Bremskreis für die beiden anderen Radbremsen ist in Aufbau und Funktion mit dem gezeigten Bremskreis identisch und wird daher nicht näher beschrieben.

Die Bremskreise werden gemäß Fig. 1 von der Betätigungseinheit THZ 11 mit hydraulischem Druck beaufschlagt. Dabei wird der THZ 11 über den Hydraulikvorrat des Behälters 13 mit Hydraulikflüssigkeit versorgt. Der THZ 11 wird über den vorstehend beschriebenen hydraulischen Bremskraftverstärker 7 betätigt. Der von der jeweiligen Steuerung bzw. Regelung einer elektronischen Einheit 28 angeforderte Druck wird über den hydraulischen Verstärker 7 und den THZ 11 erzeugt. Die Radbremsen 30, 31 werden durch stromlos offene (SO) Ventile 15.1 und 15.2 direkt aus dem THZ 11 über eine Leitung 14, ein SO-Trennventil 9 und anschließende Leitungen 14.1 und 14.2 mit Druck versorgt, wobei der THZ 11 über den hydraulischen Verstärker 7 betätigt wird, der durch eine Druckquelle 4, 19, 20 mit hydraulischem Druck beaufschlagbar ist.

Der zuvor aufgebaute Bremsdruck wird über eine Rücklaufleitung 17 und stromlos geschlossene (SG) Ventile 16.1 und 16.2 wahlweise in einen Niederdruckspeicher 18 abgelassen oder über ein SG-Umschaltventil 8 zurück zum THZ 11 geführt.

In der Regel wird die Ladung des Hochdruckspeichers_4 durch Öffnen eines Ventils 2 vollzogen. Dabei wird, wenn der Druck in dem Hochdruckspeicher unter einen vorgegebenen Sollwert fällt, Bremsflüssigkeit vom THZ 11 über das offene Umschaltventil 8 und mittels der mit dem Motor 20 betriebenen Pumpe 19 angesaugt. Über ein an der Druckseite 21 der Pumpe 19 anschließendes Rückschlagventil 23, eine Dämpfungskammer 57, über eine Leitungsverzweigung 22 und eine Leitung 24, in die das Ventil 2 und ein Drucksensor 3 eingefügt sind, wird die Bremsflüssigkeit in den Hochdruckspeicher 4 gepumpt. Der Motor 20 wird dabei solange angesteuert, bis ein vorgegebener Solldruck erreicht wird. Der Druck wird dabei durch den Drucksensor 3 gemessen. Beim Befüllen des Hochdruckspeichers 4 ist das in einer Leitung 50 zwischen Hochdruckspeicher 4 und Verstärker 7 angeordnete Ventil 5 geschlossen. Die Druckseite der Pumpe 19 ist auch über die Verzeigung 22 und eine daran anschließende Leitung 25, in die ein Ventil 1 eingefügt ist, mit den Radbremsen 30,31 verbunden.

Wird ein Bremswunsch durch die Sensorik 60 detektiert, wird das vorzugsweise analog zu betreibende Ventil 5 in Abhängigkeit von Verfahrweg der Druckstange 46 des Bremspedals 24 und/oder der Betätigungsgeschwindigkeit entsprechend geöffnet, so dass Bremsflüssigkeit von dem geladenen Hochdruckspeicher 4 in den hinter dem Verstärkerkolben liegenden Raum 47 strömen kann. Der Aufbau des Druckes im Verstärker 7 wird hierbei über den sich einstellenden Druck im THZ 11 mit einem Drucksensor 10a überwacht. Das heißt, ein bestimmter Weg wird einem bestimmten Druck im THZ 11 zugeordnet und eingeregelt. Dabei fährt der Verstärkerkolben 41 vor der zunehmend in den Verstärkerraum 47 vordringenden Druckstange 46 des Bremspedals 26 her, ohne das ein Kontakt entsteht bzw. entstehen muss. Vorzugsweise ist es vorgesehen, zwischen der Druckstange 46 und dem Verstärkerkolben 41 ein elastisches Mittel, insbesondere eine Feder vorzusehen, um eine elastische Ankopplung zu erreichen.

Nimmt der Fahrer das Bremspedal zurück, d.h wird der Weg wieder kleiner, wird das Ventil 5 geschlossen und ein ebenfalls vorzugsweise analog zu betreibende Ventil 6 in einer Leitung 12 zwischen dem Hochdruckspeicher 4 und dem Behälter 13, entsprechend der Rücknahme des Fahrerwunsches analog geöffnet und die Bremsflüssigkeit kann wieder in den Vorratsbehälter 13 zurückströmen. Durch die vorzugsweise Auslegung des Ventils 6 als SO-Ventil, ist es möglich, bei einem Systemausfall den Verstärker zu betätigen, ohne dass Unterdruck im Verstärker 7 (bzw. im Verstärkerraum 47) entsteht, denn es erfolgt ein Volumenausgleich über das Ventil 6. Der Fahrer muss bei dieser Einbremserkennung nur die Zusatzkraft überwinden, die durch den schon in dem Verstärker 7 eingestellten Druck erzeugt wird. Diese Zusatzkraft ist nur abhängig von der Fläche der Druckstange 46 die in den Verstärker 7 eindringt.

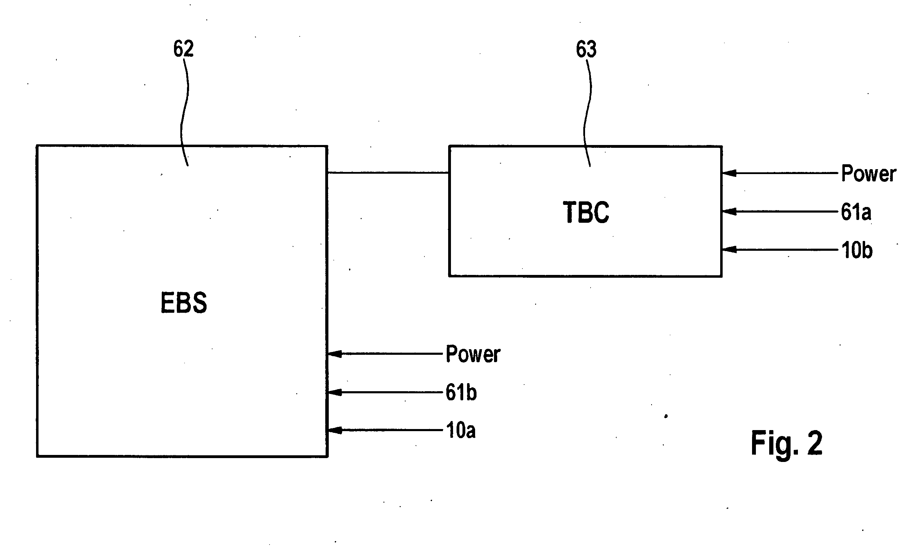

Ist die Regelung des Verstärkers 7 autonom aufgebaut, würde ein Ausfall der in Fig. 1 strichpunktiert umschlossenen und mit der Bezeichnung EBS versehenen Komponenten den Verlust der Leitgröße THZ-Druck nach sich ziehen, was wiederum ein Ausfall der Regelung des Verstärkers 7 zur Folge hätte. Ist also die Pumpe 19 oder der Pumpenmotor 20 defekt und der Drucksensor 10a liefert keine Ausgangssignale, so wird die Verstärkerkammer 47 nach Maßgabe der die Betätigung erfassenden Sensorik 60 mit hydraulischem Druck aus dem Hochdruckspeicher 4 beaufschlagt. Sofern der Drucksensor 10a noch verfügbar ist, kann die Verstärkerkammer 47 nach Maßgabe des Drucksensors 10a mit hydraulischem Druck aus dem Hochdruckspeicher 4 beaufschlagt werden. Durch diese Maßnahme können noch mehrere Regelungen des Verstärkers 7 mit hydraulischer Bremskraftunterstützung durchgeführt werden, bis der Hochdruckspeicher 4 entleert ist. Da bei einem Ausfall der EBS-Komponenten der Drucksensor 10a wahrscheinlich nicht verfügbar ist, ist ein zweiter Drucksensor 10b vorgesehen nach dessen Maßgabe die Verstärkerkammer 47 mit Druck aus dem Hochdruckspeicher 4 beaufschlagt wird. Die Ausgangssignale des zweiten Drucksensor 10b werden einem Steuergerät 63 zur Regelung des Verstärkers 7 zugeführt, das von einem weiteren Steuergerät 62 zur Regelung der EBS-Komponenten getrennt ist, wie nachfolgend anhand von Fig. 2 noch näher erläutert wird. Bei einem Defekt des Steuergerätes 62 zur Regelung der EBS-Komponenten ist der eben beschriebene Betrieb des Verstärkers 7 bzw. die eben beschriebene Versorgung der Verstärkerkammer 47 mit hydraulischem Druck aus dem Hochdruckspeicher 4 weiterhin gewährleistet.

Fällt die Regelung des Verstärkers 7 aus, das heißt, ist der Hochdruckspeicher 4, die Sensorik 60 und das Steuergerät 63 zur Verstärkerregelung defekt, werden die Radbremsen 30, 31 von der hydraulischen Pumpe 19 nach Maßgabe des Drucksensors 10a mit hydraulischem Druck beaufschlagt. Durch diese Maßname können in der Rückfallebene Bremsungen mit hydraulischer Bremskraftunterstützung durchgeführt werden. Die Sensorik 60 wird dabei durch zwei Drehwinkelgeber 61a und 61b gebildet, die jeweils einem Steuergerät 62, 63 zugeordnet werden, wie nachfolgend anhand von Fig. 2 noch näher beschrieben wird. Das bedeutet, dass ein Defekt des Steuergeräts 63 zur Verstärkerregelung nicht zwangsläufig einen vollständigen Ausfall der Sensorik 60 nach sich zieht und die Radbremsen 30, 31 können von der hydraulischen Pumpe 19 nach Maßgabe des vom Defekt des Steuergerätes 63 nicht betroffenen Drehwinkelgeber 61b mit hydraulischem Druck beaufschlagt werden.

Wie in Fig. 2 dargestellt ist, wird die Steuer- und Regeleinheit 28 durch zwei Steuergeräte 62, 63 gebildet. Dem Steuergerät 62 zur Regelung der EBS-Komponenten werden die Ausgangssignale eines Drucksensors 10a und eines Drehwinkelgebers 61b zugeführt. Dem anderen Steuergerät 63 zur Verstärkerregelung werden ebenfalls die Ausgangssignale eines Drucksensors 10b und eines Drehwinkelgebers 61a zugeführt. Durch diese Maßnahmen ist ein Betrieb der Fahrzeugbremsanlage in der Rückfallebene während eines möglichen Ausfalls einzelner Komponenten zuverlässig gewährleistet.

Die Sensoren der Rückfallebene werden während der normalen Funktion zusätzlich zur Plausibilisierung herangezogen. Dazu werden die Ausgangswerte der beiden Drehwinkelgeber 61a, 61b miteinander verglichen. Gleiches gilt für die Ausgangswerte der beiden Drucksensoren 10a, 10b und selbst-verständlich ist darüber hinaus eine Plausibilitätsprüfung zwischen den Ausgangswerten der Drehwinkelgeber 61a, 61b und den Ausgangswerten der Drucksensoren 10a, 10b möglich.

## Patentansprüche

1. Hydraulische Fahrzeugbremsanlage, die einen von einer Bremsbetätigungseinrichtung betätigbaren Bremsdruckgeber, der über eine hydraulische Leitung mit Radbremsen (30, 31) des Fahrzeugs verbindbar ist, aufweist, wobei der Bremsdruckgeber im wesentlichen aus einem Hauptbremszylinder (11) und einem vorgeschalteten hydraulischen Verstärker (7) besteht, der eine Verstärkungskammer (47) und einen darin angeordneten Verstärkerkolben (41) aufweist, der in Kraftabgaberichtung über ein Betätigungselement (42) mit einem Hauptbremszylinderkolben wirkverbunden ist und der zwecks Bremskraftverstärkung mit einem hydraulischen Druck eines von einer hydraulischen Pumpe (19, 20) ladbaren Hochdruckspeichers (4) nach Maßgabe einer die Betätigung erfassenden Sensorik (60) und/oder nach Maßgabe eines den im Hauptbremszylinders (11) herrschenden, hydraulischen Drucks erfassenden Drucksensors (10a, 10b) beaufschlagbar ist, **daduzch gekennzeichnet,** dass Mittel (1, 2, 8, 9) vorgesehen sind, die bei einem Ausfall des Hochdruckspeichers (4) eine Beaufschlagung der Radbremsen (30, 31) mit hydraulischem Druck durch die hydraulische Pumpe (19, 20) nach Maßgabe der die Betätigung erfassenden Sensorik (60), die durch zwei Drehwinkelgeber (61a, 61b) gebildet wird, oder nach Maßgabe des Drucksensors (10a, 10b) durchführen, wobei eine elektronische Steuer- und Regeleinheit (28) vorgesehen ist, die zwei getrennte Steuergeräte (62, 63) umfasst, wobei jedem Steuergerät (62, 63) jeweils ein Drehwinkelgeber (61a, 61b), der die Betätigung erfasst, und ein Drucksensor (10a, 10b), der den im Hauptbremszylinder herrschenden hydraulischen Druck erfasst, zugeordnet wird, wobei die zwei getrennten Steuergeräte miteinander verbunden sind und ein Vergleich der Ausgangswerte der beiden Drehwinkelgeber sowie der Ausgangswerte der beiden Drucksensoren vorgenommen wird.

2. Hydraulische Fahrzeugbremsanlage nach Anspruch 1, **dadurch gekennzeichnet, dass** Mittel (5) vorgesehen sind, die bei einem Ausfall der Pumpe (19, 20) eine Beaufschlagung der Verstärkerkammer (47) mit hydraulischem Druck aus dem Hochdruckspeicher (4) nach Maßgabe der die Betätigung erfassenden Sensorik (60) oder nach Maßgabe des Drucksensors (10a, 10b) durchführen.

3. Verfahren zum Betrieb einer hydraulischen Fahrzeugbremsanlage nach einem der Ansprüche 1 bis 2, die einen von einer Bremsbetätigungseinrichtung betätigbaren Bremsdruckgeber, der über eine hydraulische Leitung mit Radbremsen (30, 31) des Fahrzeugs verbindbar ist, aufweist, wobei der Bremsdruckgeber im wesentlichen aus einem Hauptbremszylinder (11) und einem vorgeschalteten hydraulischen Verstärker (7) besteht, der eine Verstärkungskammer (47) und einen darin angeordneten Verstärkerkolben (41) aufweist, der in Kraftabgaberichtung über ein Betätigungselement (42) mit einem Hauptbremszylinderkolben wirkverbunden ist und der zwecks Bremskraftverstärkung mit einem hydraulischen Druck eines von einer hydraulischen Pumpe (19, 20) ladbaren Hochdruckspeichers (4) nach Maßgabe einer die Betätigung erfassenden Sensorik (60) und/oder nach Maßgabe eines den im Hauptbremszylinders (11) herrschenden, hydraulischen Drucks erfassenden Drucksensors (10a, 10b) beaufschlagbar ist, **dadurch gekennzeichnet, dass** die Sensorik (60) durch zwei Drehwinkelgeber (61a, 61b) gebildet wird, deren Ausgangswerte miteinander verglichen werden und ein zweiter Drucksensor (10b) zur Erfassung des im Hauptbremszylinder (11) herrschenden, hydraulischen Drucks vorgesehen ist und dass ein Vergleich der Ausgangwerte beider Drucksensoren (10a, 10b) vorgenommen wird und dass bei einem Ausfall des Hochdruckspeichers (4) die Radbremsen (30, 31) von der hydraulischen Pumpe (19, 20) nach Maßgabe des nicht von einem Defekt betroffenen Drehwinkelgebers der die Betätigung erfassenden Sensorik (60) oder nach Maßgabe eines verfügbaren Drucksensors (10a, 10b) mit hydraulischem Druck beaufschlagt werden.

4. Verfahren nach Anspruch 3, **dadurch gekennzeichnet, dass** bei einem Ausfall der Pumpe (19, 20) die Verstärkerkammer (47) nach Maßgabe des nicht von einem Defekt betroffenen Drehwinkelgebers der die Betätigung erfassenden Sensorik (60) oder nach Maßgabe eines verfügbaren Drucksensors (10a, 10b) mit hydraulischem Druck aus dem Hochdruckspeicher (4) beaufschlagt wird.

## Claims

1. Hydraulic vehicle brake system which has a brake pressure signal generator which can be activated by a brake activation device and which can be connected via a hydraulic line to wheel brakes (30, 31) of the vehicle, wherein the brake pressure signal generator is composed essentially of a master brake cylinder (11) and a hydraulic booster (7) which is connected upstream and which has a booster chamber (47) and a booster piston (41) which is arranged therein and which is operatively connected to a master brake cylinder piston in the force output direction via an activation element (42), and to which, for the purpose of boosting braking force, a hydraulic pressure can be applied from a high pressure accumulator (4), which can be charged by a hydraulic pump (19, 20), in accordance with a sensor system (60) which senses the activation and/or in accordance with a pressure sensor (10a, 10b) which senses the hydraulic pressure prevailing in the master brake cylinder (11), **characterized in that** means (1, 2, 8, 9) are provided which, in the event of a failure of the high pressure accumulator (4), apply hydraulic pressure to the wheel brakes (30, 31) by means of the hydraulic pump (19, 20) in accordance with the sensor system (60) which senses the activation and which is formed by two rotational angle signal generators (61a, 61b), or in accordance with the pressure sensor (10a, 10b), wherein an electronic open- and closed-loop control unit (28) is provided which comprises two separate control devices (62, 63), wherein each control device (62, 63) is respectively assigned a rotational angle signal generator (61a, 61b) which senses the activation, and a pressure sensor (10a, 10b) which senses the hydraulic pressure prevailing in the master brake cylinder, wherein the two separate control devices are connected to one another and a comparison of the output values of the two rotational angle signal generators and the output values of the two pressure sensors is performed.

2. Hydraulic vehicle brake system according to Claim 1, **characterized in that** means (5) are provided which, in the event of a failure of the pump (19, 20), apply hydraulic pressure to the booster chamber (47) from the high pressure accumulator (4) in accordance with the sensor system (60) which senses the activation or in accordance with the pressure sensor (10a, 10b).

3. Method for operating a hydraulic vehicle brake system according to one of Claims 1 to 2, which hydraulic vehicle brake system has a brake pressure signal generator which can be activated by a brake activation device and which can be connected via a hydraulic line to wheel brakes (30, 31) of the vehicle, wherein the brake pressure signal generator is composed essentially of a master brake cylinder (11) and a hydraulic booster (7) which is connected upstream and which has a booster chamber (47) and a booster piston (41) which is arranged therein and which is operatively connected to a master brake cylinder piston in the force output direction via an activation element (42), and to which, for the purpose of boosting braking force, a hydraulic pressure can be applied from a high pressure accumulator (4), which can be charged by a hydraulic pump (19, 20), in accordance with a sensor system (60) which senses the activation and/or in accordance with a pressure sensor (10a, 10b) which senses the hydraulic pressure prevailing in the master brake cylinder (11), **characterized in that** the sensor system (60) is formed by two rotational angle signal generators (61a, 61b) whose output values are compared with one another, and a second pressure sensor (10b) is provided for sensing the hydraulic pressure prevailing in the master brake cylinder (11), and **in that** a comparison of the output values of the two pressure sensors (10a, 10b) is performed, and **in that** in the event of a failure of the high pressure accumulator (4) hydraulic pressure is applied to the wheel brakes (30, 31) by the hydraulic pump (19, 20) in accordance with the rotational angle signal generator, which is not affected by a defect, of the sensor system (60) which senses the activation or in accordance with an available pressure sensor (10a, 10b).

4. Method according to Claim 3, **characterized in that** in the event of a failure of the pump (19, 20) hydraulic pressure is applied to the booster chamber (47) from the high pressure accumulator (4) in accordance with the rotational angle signal generator, which is not affected by a defect, of the sensor system (60) which senses the activation or in accordance with an available pressure sensor (10a, 10b).

## Revendications

1. Système de freinage hydraulique de véhicule, qui présente un détecteur de pression de freinage pouvant être actionné par un dispositif d'actionnement de frein, qui peut être connecté par le biais d'une conduite hydraulique à des freins de roue (30, 31) du véhicule, le détecteur de pression de freinage se composant essentiellement d'un cylindre de frein principal (11) et d'un amplificateur hydraulique (7) monté en amont, qui présente une chambre d'amplification (47) et un piston amplificateur (41) disposé à l'intérieur de celle-ci, lequel est en liaison fonctionnelle dans la direction de dégagement de force par le biais d'un élément d'actionnement (42) avec un piston du cylindre de frein principal et peut être sollicité, en vue de l'amplification de la force de freinage, avec une pression hydraulique d'un accumulateur haute pression (4) pouvant être chargé par une pompe hydraulique (19, 20) en fonction d'un système de capteur (60) détectant l'actionnement et/ou en fonction d'un capteur de pression (10a, 10b) détectant la pression hydraulique régnant dans le cylindre de frein principal (11), **caractérisé en ce que** des moyens (1, 2, 8, 9) sont prévus, lesquels, en cas de panne de l'accumulateur haute pression (4), effectuent une sollicitation des freins de roue (30, 31) avec une pression hydraulique par la pompe hydraulique (19, 20) en fonction du système de capteur (60) détectant l'actionnement, qui est formé par deux détecteurs d'angle de rotation (61a, 61b), ou en fonction du capteur de pression (10a, 10b), une unité de commande et de régulation (28) étant prévue, laquelle comprend deux appareils de commande séparés (62, 63), un détecteur d'angle de rotation (61a, 61b) qui détecte l'actionnement, et un capteur de pression (10a, 10b), qui détecte la pression hydraulique régnant dans le cylindre de frein principal, étant à chaque fois associés à chaque appareil de commande (62, 63), les deux appareils de commande séparés étant connectés l'un à l'autre et une comparaison des valeurs de sortie des deux détecteurs d'angle de rotation ainsi que des valeurs de sortie des deux capteurs de pression étant effectuée.

2. Système de freinage hydraulique de véhicule selon la revendication 1, **caractérisé en ce que** des moyens (5) sont prévus, lesquels, en cas de panne de la pompe (19, 20), effectuent une sollicitation de la chambre d'amplification (47) avec une pression hydraulique provenant de l'accumulateur haute pression (4) en fonction du système de capteur (60) détectant l'actionnement ou en fonction du capteur de pression (10a, 10b).

3. Procédé pour faire fonctionner un système de freinage hydraulique de véhicule selon l'une quelconque des revendications 1 à 2, qui présente un détecteur de pression de freinage pouvant être actionné par un dispositif d'actionnement de frein, qui peut être connecté par le biais d'une conduite hydraulique à des freins de roue (30, 31) du véhicule, le détecteur de pression de freinage se composant essentiellement d'un cylindre de frein principal (11) et d'un amplificateur hydraulique (7) monté en amont, qui présente une chambre d'amplification (47) et un piston amplificateur (41) disposé à l'intérieur de celle-ci, lequel est en liaison fonctionnelle dans la direction de dégagement de force par le biais d'un élément d'actionnement (42) avec un piston du cylindre de frein principal et peut être sollicité, en vue de l'amplification de la force de freinage, avec une pression hydraulique d'un accumulateur haute pression (4) pouvant être chargé par une pompe hydraulique (19, 20) en fonction d'un système de capteur (60) détectant l'actionnement et/ou en fonction d'un capteur de pression (10a, 10b) détectant la pression hydraulique régnant dans le cylindre de frein principal (11), **caractérisé en ce que** le système de capteur (60) est formé par deux détecteurs d'angle de rotation (61a, 61b) dont les valeurs de sortie sont comparées l'une à l'autre et un deuxième capteur de pression (10b) pour la détection de la pression hydraulique régnant dans le cylindre de frein principal (11) est prévu et **en ce qu'**une comparaison des valeurs de sortie des deux capteurs de pression (10a, 10b) est effectuée et **en ce qu'**en cas de panne de l'accumulateur haute pression (4), les freins de roue (30, 31) sont sollicités avec une pression hydraulique par la pompe hydraulique (19, 20) en fonction du détecteur d'angle de rotation non affecté par une défaillance du système de capteur (60) détectant l'actionnement ou en fonction d'un capteur de pression disponible (10a, 10b).

4. Procédé selon la revendication 3, **caractérisé en ce que** dans le cas d'une panne de la pompe (19, 20), la chambre d'amplification (47) est sollicitée avec une pression hydraulique de l'accumulateur haute pression (4) en fonction du détecteur d'angle de rotation non affecté par une défaillance du système de capteur (60) détectant l'actionnement ou en fonction d'un capteur de pression disponible (10a, 10b).
